# EUROPEAN PATENT APPLICATION

(11) **EP 3 078 467 A1**
(43) Date of publication of application: **12.10.2016**
(21) Application number: 15871289.3
(22) Date of filing: 13.02.2015
(51) Int. Cl.: B29C 33/02, B29C 35/02

(54) **TIRE PREHEATING APPARATUS, TIRE VULCANIZATION SYSTEM, TIRE PREHEATING METHOD, AND TIRE MANUFACTURING METHOD**

(71) Applicant: Mitsubishi Heavy Industries Machinery Technology Corporation, Hiroshima 733-8553 (JP)
(72) Inventor: YOKOO, Kazutoshi, Tokyo 108-8215 (JP); KAJITANI, Fumito, Tokyo 108-8215 (JP); SHINTANI, Koji, Hiroshima-shi Hiroshima 733-8553 (JP)
(74) Representative: Henkel, Breuer & Partner
(86) International application number: PCT/JP2015/054004
(87) International publication number: WO 2016/129112

(57) **Abstract**

A tire preheating apparatus (50) of the present invention, includes an external preheating portion (51) which surrounds the outside of a green tire (40X) having an easy vulcanization region (A2) and a difficult vulcanization region (A1), and heats the green tire (40X) to a normal temperature or more from an outer surface side of the green tire (40X) at a temperature less than the temperature at which a vulcanization reaction is promoted in the green tire, and an internal preheating portion (54) which is disposed inside the green tire (40X), and heats the green tire (40X) to a normal temperature or more from an inner surface side of the green tire (40X) at a temperature less than the temperature at which a vulcanization reaction is promoted in the green tire (40X), in which the external preheating portion (51) includes a first tire heater (52) which heats an outer surface of the easy vulcanization region (A2), and a second tire heater (53) which heats an outer surface of the difficult vulcanization region (A1) at a higher heating value than that of the first tire heater (52).

## Description

### Technical Field

The present invention relates to a tire preheating apparatus, a tire vulcanizing system, a tire preheating method, and a tire manufacturing method.

### Background Art

In the related art, a green tire which is molded by a molding machine is vulcanized by a vulcanizing apparatus.

Before vulcanization with respect to a green tire starts, it is possible to decrease the time required for the vulcanization by preheating an unvulcanized green tire (for example, refer to PTL 1 and PTL 2) or preheating a metal mold or a bladder for vulcanizing a green tire (for example, refer to PTL 3 and PTL 4).

### Citation List

### Patent Literature

[PTL 1] Japanese Unexamined Patent Application Publication No. 2009-248308
[PTL 2] Japanese Unexamined Patent Application Publication No. 2014-076581
[PTL 3] Japanese Unexamined Patent Application Publication No. 9-193160
[PTL 4] Japanese Patent No. 4998992

### Summary of Invention

### Technical Problem

In order to obtain a desired performance of a tire, portions in which rubber thicknesses or kinds of rubber are different from each other may exist in the tire. In the portions in which rubber thicknesses or kinds of rubber are different from each other in the tire, ease of heat transmission or ease of vulcanization reaction may be different from each other, and in the green tire which is formed of the materials of this tire, a region (easy vulcanization region) which is easily subjected to the vulcanization and a region (difficult vulcanization region) which is not easily subjected to the vulcanization exist.

In the technologies disclosed in PTL 1 to PTL 4, in a case where the easy vulcanization region and the difficult vulcanization region exist in one kind of green tire, a portion which is appropriately preheated to the vicinity of a temperature at which a vulcanization reaction is promoted, a portion in which preheating is insufficient, and a portion in which preheating is excessive are likely to occur in the green tire.

The present invention is made in consideration of the above-described circumstances, and an object thereof is to provide a tire preheating apparatus, a tire vulcanizing system, a tire preheating method, and a tire manufacturing method capable of preheating a green tire in a temperature distribution which suitably corresponds to each of the easy vulcanization region and the difficult vulcanization region with respect to the green tire having the easy vulcanization region and the difficult vulcanization region.

### Solution to Problem

According to a first aspect of the present invention, there is provided a tire preheating apparatus, including: an external preheating portion which surrounds the outside of a green tire having an easy vulcanization region and a difficult vulcanization region, and heats the green tire to a normal temperature or more from an outer surface side of the green tire at a temperature less than the temperature at which a vulcanization reaction is promoted in the green tire; and an internal preheating portion which is disposed inside the green tire, and heats the green tire to a normal temperature or more from an inner surface side of the green tire at a temperature less than the temperature at which a vulcanization reaction is promoted in the green tire, in which the external preheating portion includes: a first tire heater which heats an outer surface of the easy vulcanization region; and a second tire heater which heats an outer surface of the difficult vulcanization region at a higher heating value than that of the first tire heater.

In the tire preheating apparatus, since the second tire heater heats the outer surface of the difficult vulcanization region by a higher heating value than that generated by the heating of the first tire heater with respect to the outer surface of the easy vulcanization region, it is possible to transmit more heat to the outer surface of the difficult vulcanization region relative to the outer surface of the easy vulcanization region within a period of time from starting of preheating using the tire preheating apparatus to ending of the preheating.

According to a second aspect of the present invention, there is provided a tire vulcanizing system, including: the tire preheating apparatus according to the above aspect; a tire vulcanizing apparatus which vulcanizes a green tire which is heated from a normal temperature to a temperature less than a temperature at which a vulcanization reaction is promoted by the tire preheating apparatus, in which the tire vulcanizing apparatus includes: a tire mold which surrounds the outside of the green tire; a bladder which is disposed inside the green tire and pressurizes the green tire from an inner surface side of the green tire toward the tire mold side; and a bladder preheating portion which heats an outer surface of the bladder from the normal temperature to the temperature less than the temperature at which the vulcanization reaction is promoted in the green tire.

In the tire vulcanizing system, the bladder preheating portion preheats the outer surface of the bladder, a temperature difference between the green tire which is preheated by the tire preheating apparatus at the temperature in the vicinity of the vulcanization promotion temperature and the outer surface of the bladder decreases, and it is possible to prevent a decrease in temperature of the green tire when the green tire preheated by the tire preheating apparatus comes into contact with the bladder. In addition, according to the tire vulcanizing system, it is possible to appropriately vulcanize the green tire even when a heating time decreases.

The bladder preheating portion may include: a first bladder heater which heats a region of the outer surface of the bladder which comes into contact with the inner surface of the easy vulcanizing region; and a second bladder heater which heats a region of the outer surface of the bladder which comes into contact with the inner surface of the difficult vulcanization region at a higher heating value than that of the first bladder heater.

In this case, since the bladder can come into contact with the inner surface of the green tire in a state where the temperature distribution is generated in which the temperature in the region of the outer surface of the bladder heated by the second bladder heater is higher than the temperature in the region of the outer surface of the bladder heated by the first bladder heater, the heat which is more than the heat transmitted to the inner surface of the easy vulcanization region can be transmitted to the inner surface of the difficult vulcanization region to promote the vulcanization reaction.

According to a third aspect of the present invention, there is provided a tire preheating method, including: a step of heating a green tire having an easy vulcanization region and a difficult vulcanization region from an outer surface side of the green tire from a normal temperature to a temperature less than the temperature at which vulcanization of the green tire is promoted by a heating value which is relatively smaller with respect to the easy vulcanization region and is relatively greater with respect to the difficult vulcanization region.

According to the tire preheating method, it is possible to preheat the green tire having the easy vulcanization region and the difficult vulcanization region from the outer surface side of the green tire such that the heat transmitted to the outer surface of the difficult vulcanization region is more than the heat transmitted to the outer surface of the easy vulcanization region.

According to a fourth aspect of the present invention, there is provided a tire manufacturing method, including: a preheating step of heating a green tire having an easy vulcanization region and a difficult vulcanization region from an outer surface side of the green tire from a normal temperature to a preheating temperature less than the temperature at which vulcanization of the green tire is promoted by a heating value which is relatively smaller with respect to the easy vulcanization region and is relatively greater with respect to the difficult vulcanization region; and a vulcanizing step of heating the green tire, which is heated to the preheating temperature, to a temperature exceeding the preheating temperature, and vulcanizing the green tire in a tire mold.

According to the tire manufacturing method, it is possible to perform vulcanization in a state where unevenness in a vulcanization degree decreases even when the green tire having the easy vulcanization region and the difficult vulcanization region is used as a material.

According to a fifth aspect of the present invention, there is provided a tire manufacturing method, including: a tire preheating step of heating a green tire having an easy vulcanization region and a difficult vulcanization region from an outer surface side of the green tire from a normal temperature to a preheating temperature less than the temperature at which vulcanization of the green tire is promoted by a heating value which is relatively smaller with respect to the easy vulcanization region and is relatively greater with respect to the difficult vulcanization region; a bladder preheating step of heating a bladder disposed inside the green tire to vulcanize the green tire such that a surface of the bladder coming into contact with the easy vulcanization region has a relatively low temperature and a surface of the bladder coming into contact with the difficult vulcanization region has a relatively high temperature; and a vulcanizing step of disposing the green tire heated to the preheating temperature in a tire mold, allowing an inner surface of the green tire heated to the preheating temperature to come into contact with the bladder, heating the green tire such that the temperature of the green tire exceeds the preheating temperature, and vulcanizing the green tire in the tire mold.

According to the tire manufacturing method, it is possible to perform vulcanization in a state where unevenness in a vulcanization degree decreases even when the green tire having the easy vulcanization region and the difficult vulcanization region is used a material.

### Advantageous Effects of Invention

According to the present invention, it is possible to provide the tire preheating apparatus, the tire vulcanizing system, the tire preheating method, and the tire manufacturing method capable of preheating the green tire in a temperature distribution which suitably corresponds to each of the easy vulcanization region and the difficult vulcanization region with respect to the green tire having the easy vulcanization region and the difficult vulcanization region.

### Brief Description of Drawings

Fig. 1 is a schematic view of a tire vulcanizing system including a tire preheating apparatus of a first embodiment of the present invention.
Fig. 2 is a schematic view showing another configuration example of an internal irradiation-heat heater which is provided in the tire preheating apparatus.
Fig. 3 is a schematic view showing still another configuration of the internal irradiation-heat heater.
Fig. 4 is a schematic view showing still another configuration of the internal irradiation-heat heater.
Fig. 5 is a schematic view of a tire vulcanizing system of a second embodiment of the present invention.
Fig. 6 is a schematic view showing a bladder preheating device of the tire vulcanizing system.
Fig. 7 is a schematic view showing the bladder preheating device of the tire vulcanizing system. Description of Embodiments

### (First Embodiment)

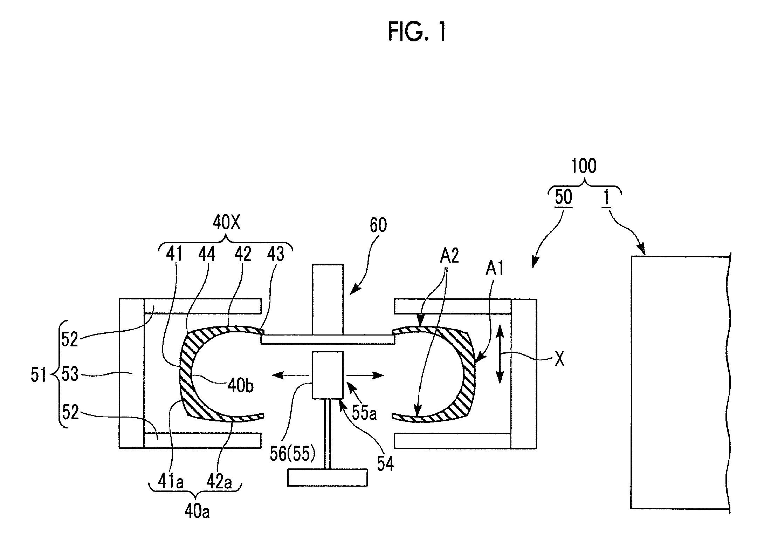

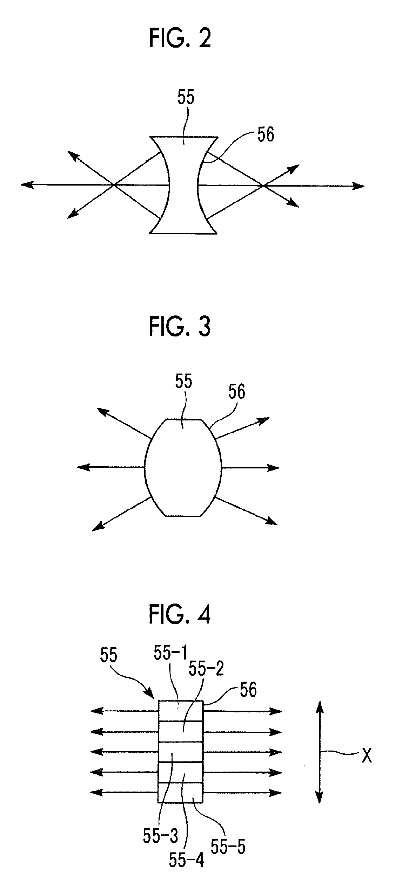

With respect to a tire preheating apparatus of a first embodiment of the present invention, a tire vulcanizing system including the tire preheating apparatus is described as an example. Fig. 1 is a schematic view of a tire vulcanizing system including a tire preheating apparatus of the present embodiment. Fig. 2 is a schematic view showing another configuration example of an internal irradiation-heat heater which is provided in the tire preheating apparatus. Fig. 3 is a schematic view showing still another configuration of the internal irradiation-heat heater of the tire preheating apparatus.

A tire vulcanizing system 100 of the present embodiment shown in Fig. 1 includes a known tire vulcanizing apparatus 1, and a tire preheating apparatus 50 which preheats a green tire 40X carried into the tire vulcanizing apparatus 1. In the present embodiment, the configuration of the tire vulcanizing apparatus 1 is not particularly limited, and detailed illustrations and descriptions thereof are omitted.

As shown in Fig. 1, the tire preheating apparatus 50 includes an external preheating portion 51 and an internal preheating portion 54.

The external preheating portion 51 is disposed to surround the outside of the green tire 40X so as to heat the green tire 40X from an outer surface 40a of the green tire 40X. The external preheating portion 51 heats the green tire 40X from the outer surface 40a side of the green tire 40X from a normal temperature to a temperature less than the temperature at which a vulcanization reaction is promoted in the green tire 40X. The temperature at which the vulcanization reaction is promoted in the green tire 40X is a temperature which is determined according to a kind of rubber of the green tire 40X or the like, and has the minimum temperature generating the vulcanization reaction suitable for the vulcanization with respect to the green tire 40X as a lower limit.

The external preheating portion 51 includes a first tire heater 52 and a second tire heater 53.

The first tire heater 52 and the second tire heater 53 heat the green tire 40X from the outer surface 40a of the green tire 40X by a heating value corresponding to the configuration of the green tire 40X which is an object to be vulcanized. Hereinafter, a configuration is exemplified in which preheating of the green tire 40X can be suitably performed in a case where the green tire 40X in which a thickness of a tread portion 41 is thicker than a thickness of a side wall 42 is vulcanized. In this case, the side wall 42 is an easy vulcanization region A2 and the tread portion 41 is a difficult vulcanization region A1.

In addition, the easy vulcanization region A2 and the difficult vulcanization region A1 are not limited to the above-described example, and may be defined according to the configuration of the green tire 40X. For example, a configuration in which a thickness of a shoulder portion 44 of the tire 40 is thick may be suitably applied to a run flat tire. However, in this case, in general, the thickness of the shoulder portion 44 is thicker than the thickness of the side wall 42, and the shoulder portion 44 may be defined as the difficult vulcanization region A1 while the side wall 42 may be defined as the easy vulcanization region A2. In addition, in a case where kinds of rubber are different from each other in a tread width direction X, silica, oil, or other additives are partially included in the tread portion 41 in the tread width direction X, or the like, the distribution in the preheating temperatures in the tread portion 41 is required to be provided in consideration of influences with respect to vulcanization in the cases. In this case, the easy vulcanization region A2 and the difficult vulcanization region A1 can be defined in the tread portion 41.

The first tire heater 52 is a heater which preheats an outer surface 42a of the side wall 42 of the green tire 40X. A heat generation method of the first tire heater 52 is not particularly limited. For example, the first tire heater 52 may be a heater which comes into contact with the outer surface 42a of the side wall 42 of the green tire 40X to heat the side wall 42. In addition, the first tire heater 52 may be a heater which heats the side wall 42 via a gaseous heating medium which comes into contact with the outer surface 42a of the side wall 42 of the green tire 40X. In addition, the first tire heater 52 may be a heater which emits radiation heat toward the outer surface 42a of the side wall 42 of the green tire 40X. As the heater which emits radiation heat, there is an infrared heater which emits infrared rays having a wavelength which is easily absorbed to a tire. Specifically, an infrared heater, which emits infrared rays having a peak within a range in which an absorption wavelength of the tire is from 1 µm to 10 µm, may be adopted as the first tire heater 52 of the present embodiment. In addition, an infrared heater, which emits infrared rays having a peak within a range in which the absorption wavelength of the tire is from 3 µm to 6 µm, may be adopted as the first tire heater 52 of the present embodiment. As an example of the infrared heater, there is a ceramic heater. In addition, for example, in the case of a configuration in which additives such as silica are added to the green tire 40X, an infrared heater, which emits infrared rays having a wavelength different from the absorption wavelength of the additive as a peak, may be adopted as the first tire heater 52.

The second tire heater 53 is a heater which preheats an outer surface 41a of the tread portion 41 of the green tire 40X. A heating value of the second tire heater 53 is greater than a heating value of the first tire heater 52. The heat generation method of the second tire heater 53 is not particularly limited. For example, the second tire heater 53 may be a heater which comes into contact with the outer surface 41a of the tread portion 41 of the green tire 40X to heat the tread portion 41. In addition, the second tire heater 53 may be a heater which heats the tread portion 41 via a gaseous heating medium which comes into contact with the outer surface 41a of the tread portion 41 of the green tire 40X. Moreover, the second tire heater 53 may be a heater which emits radiation heat toward the outer surface 41a of the tread portion 41 of the green tire 40X. As the heater which emits radiation heat, there is an infrared heater which emits infrared rays having a wavelength which is easily absorbed to a tire. Specifically, an infrared heater, which emits infrared rays having a peak within a range in which an absorption wavelength of the tire is from 3 µm to 6 µm, may be adopted as the second tire heater 53 of the present embodiment. As an example of the infrared heater, there is a ceramic heater. In addition, for example, in the case of a configuration in which additives such as silica are added to the green tire 40X, an infrared heater, which emits infrared rays having a wavelength different from the absorption wavelength of the additive as a peak, may be adopted as the second tire heater 53.

In the present specification, a magnitude relationship between the heating value of the first tire heater 52 and the heating value of the second tire heater 53 is determined in consideration of heating capacity per unit area on the outer surface 40a of the green tire 40X which is an object to be heated.

In addition, in the present specification, the magnitude relationship between the heating value of the first tire heater 52 and the heating value of the second tire heater 53 may be determined in consideration of absorption wavelength characteristics on the outer surface 40a of the green tire 40X which is an object to be preheated in a case where both of the first tire heater 52 and the second tire heater 53 are infrared heaters. That is, for example, even when outputs of the first tire heater 52 and the second tire heater 53 configured of infrared heaters are the same as each other, if peak wavelengths of the emitted infrared rays are different from each other, heating capacities per unit area on the outer surface 40a of the green tire 40X are different from each other. On the other hand, in a case where absorption wavelength characteristics are different from each other according to the portion on the outer surface 40a of the green tire 40X which is an object to be preheated even when peak wavelengths of the infrared rays in the first tire heater 52 and the second tire heater 53 configured of infrared heaters are the same as each other, the heating capacities per unit area on the outer surface 40a of the green tire 40X are different from each other according to the portion.

In addition, the maximum heating values of the first tire heater 52 and the second tire heater 53 are the same as each other, or the first tire heater 52 may be a heater having the maximum heating value greater than that of the second tire heater 53. In this case, when the green tire 40X is preheated, a heat generation state is controlled such that the heating value of the second tire heater 53 is greater than the heating value of the first tire heater 52.

The internal preheating portion 54 includes an internal irradiation-heat heater 55 which is disposed inside the green tire 40X in a state where the green tire 40X is attached to the tire preheating apparatus 50. In addition, instead of the internal preheating portion 54 having the internal irradiation-heat heater 55, the internal preheating portion 54 may preheat the inner surface 40b of the green tire 40X using a heating medium such as high-temperature steam or gas.

In the internal irradiation-heat heater 55, an irradiation surface 56 which emits radiation heat toward the inner surface 40b of the green tire 40X is formed. The heat emitted from the internal irradiation-heat heater 55 is mainly radiated in a normal direction of the irradiation surface 56. In the present embodiment, according to a kind of rubber, a thickness, or a shape of the tire 40, the irradiation surface 56 of the internal irradiation-heat heater 55 is configured.

For example, the irradiation surface 56 of the internal irradiation-heat heater 55 faces a region which is required to be relatively more heated in order to uniformly heat the entire green tire 40X. For example, the irradiation surface 56 of the internal irradiation-heat heater 55 has a surface 55a which faces a portion having a thick rubber thickness such that more radiation heat is transmitted to the portion having a thick rubber thickness (tread portion 41 in the present embodiment) of the green tire 40X relative to a portion having a thin rubber thickness (side wall 42 in the present embodiment).

In addition, the configuration of the irradiation surface 56 is not limited to the above-described configuration. In another example of the configuration of the irradiation surface 56, in a case where kinds of rubber of the green tire 40X are different from each other according to portions, the irradiation surface 56 of the internal irradiation-heat heater 55 has a surface which faces a portion which is configured of a rubber having a high vulcanization temperature such that more radiation heat is transmitted to the portion which is configured of a rubber having a high vulcanization temperature relative to a portion which is configured of a portion having a lower vulcanization temperature.

As still another example, the irradiation surface 56 of the internal irradiation-heat heater 55 has a surface which is defined according to a distance between the internal irradiation-heat heater 55 and the inner surface 40b of the green tire 40X such that more radiation heat is transmitted to a portion positioned at a position far from the internal irradiation-heat heater 55 corresponding to the size of the green tire 40X relative to a portion positioned at a position close to the internal irradiation-heat heater 55.

The shape of the internal irradiation-heat heater 55 is not particularly limited as long as it has the irradiation surface 56. For example, as an example of the shape of the internal irradiation-heat heater 55, the internal irradiation-heat heater 55 is formed in an approximately rod shape which is long in the tread width direction X of the green tire 40X in a state where the green tire 40X is attached to the tire preheating apparatus 50.

In addition, the outer surface shape of the internal irradiation-heat heater 55 may be a shape (refer to Fig. 1) having a columnar shaped irradiation surface 56, a shape (refer to Fig. 2) having a curved irradiation surface 56 in which the center portion in the center line direction of a columnar surface is recessed toward the inside in the radial direction, a shape (refer to Fig. 3) having an irradiation surface 56 which is formed in a spindle shaped curve in which the center portion in the center line direction of a columnar surface is expanded toward the outside in the radial direction, or the like.

In addition, as shown in Fig. 4, the internal irradiation-heat heater 55 may have a plurality of heaters (for example, heater 55-1, heater 55-2, heater 55-3, heater 55-4, and heater 55-5) which are arranged in the tread width direction X. In this case, since the heating values from the plurality of heaters (heater 55-1, heater 55-2, heater 55-3, heater 55-4, and heater 55-5) are separately controlled, it is possible to control the amount of heat reaching the inner surface 40b of the green tire 40X shown in Fig. 1.

In the internal irradiation-heat heater 55, a known heat generation method which receives a supply of power to generate heat may be appropriately selected so as to be applied. That is, as the internal irradiation-heat heater 55 of the present embodiment, an infrared heater, a ceramic heater, a carbon heater, or the like may be adopted. Preferably, the wavelength of the radiation heat from the internal irradiation-heat heater 55 is a wavelength (for example, infrared rays having a peak within a range from 3 µm to 6 µm) capable of effectively heating the green tire 40X.

In addition, the configurations of the internal irradiation-heat heaters 55 are merely examples, and the internal irradiation-heat heaters 55 of the present embodiment are not limited to the configurations.

Affects of the tire preheating apparatus 50 of the present embodiment and effects thereof are described along with a tire preheating method and a tire manufacturing method of the present embodiment.

When the tire preheating apparatus 50 of the present embodiment is operated, for example, in a state where a bead 43 of the green tire 40X is supported by a tire holding mechanism 60 schematically shown in Fig. 1, the green tire 40X is held in the tire preheating apparatus 50.

As shown in Fig. 1, in the case of the green tire 40 X in which the tread portion 41 is formed so as to be thicker than the side wall 42, the tread portion 41 is more difficult to warm relative to the side wall 42. In addition, in a case where the green tire 40X is heated by a uniform heating value from the outer surface 40a side of the green tire 40X, a temperature difference between the outer surface 40a and an intermediate portion 40c in a portion which is thickly formed in the green tire 40X is greater than that of a portion which is thinly formed.

In the present embodiment, the outer surface 42a of the side wall 42 is preheated by the first tire heater 52, the outer surface 41a of the tread portion 41 is preheated by the second tire heater 53, and the inner surface 40b of the green tire 40X is preheated by the internal irradiation-heat heater 55. Accordingly, it is possible to transmit more heat to the tread portion 41 which is the difficult vulcanization region A1 of the green tire 40X relative to the side wall 42 which is the easy vulcanization region A2 of the green tire 40X (tire preheating step).

In addition, for example, if the preheating is performed on the green tire 40X by a uniform heating value, it is considered that the vulcanization reaction is likely to start in the easy vulcanization region A2 in a process in which the difficult vulcanization region A1 is heated from a normal temperature to a temperature less than a vulcanization promotion temperature. Meanwhile, in the tire preheating apparatus 50 of the present embodiment, since the difficult vulcanization region A1 (for example, tread portion 41) and the easy vulcanization region A2 (for example, side wall 42) can have temperature distributions different from each other, as the entirety of the green tire 40X, it is possible to preheat the green tire 40X to the vicinity of a vulcanization start temperature less than the vulcanization promotion temperature.

In addition, since the side wall 42 of the green tire 40X is thinner compared to the tread portion 41, if the side wall 42 is excessively heated, the green tire 40X is likely to be deformed due to it's own weight. In the present embodiment, since the side wall 42 is preheated by the first tire heater 52 having a lower heating value than that of the second tire heater 53, it is possible to prevent the green tire 40X from being deformed due to it's own weight before the vulcanization.

After the tire preheating step, the preheated green tire 40X is carried into the tire vulcanizing apparatus 1 having a known tire mold and is vulcanized under predetermined temperature conditions (vulcanizing step).

According to the tire preheating step and the vulcanizing step, the green tire 40X is vulcanized, and a tread pattern, a tread marking, or the like is formed on the green tire 40X.

In the present embodiment, since preheating corresponding to the positions of the easy vulcanization region A2 and the difficult vulcanization region A1 in the green tire 40X is performed in the tire preheating step such that the preheating temperature becomes the temperature in the vicinity of the vulcanization start temperature less than the vulcanization promotion temperature, it is possible to preheat the green tire in the temperature distribution which suitably corresponds to each of the easy vulcanization region A2 and the difficult vulcanization region A1 with respect to the green tire having the easy vulcanization region A2 and the difficult vulcanization region A1.

### (Second Embodiment)

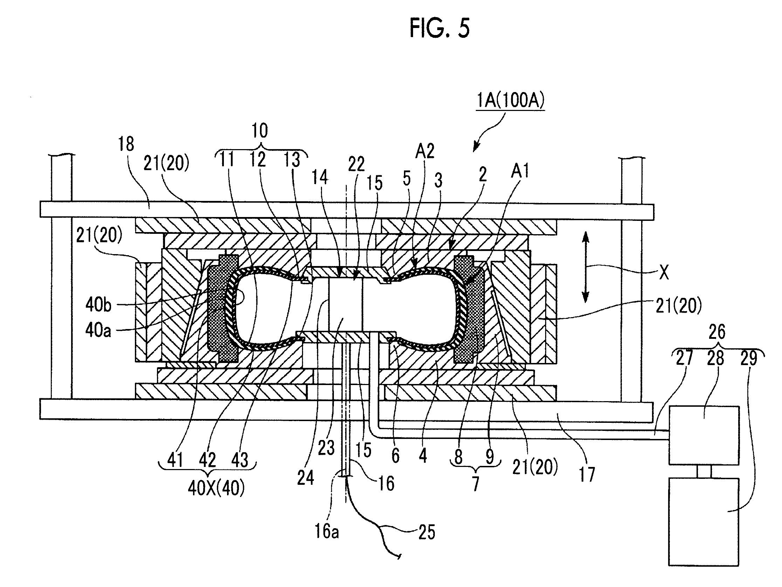

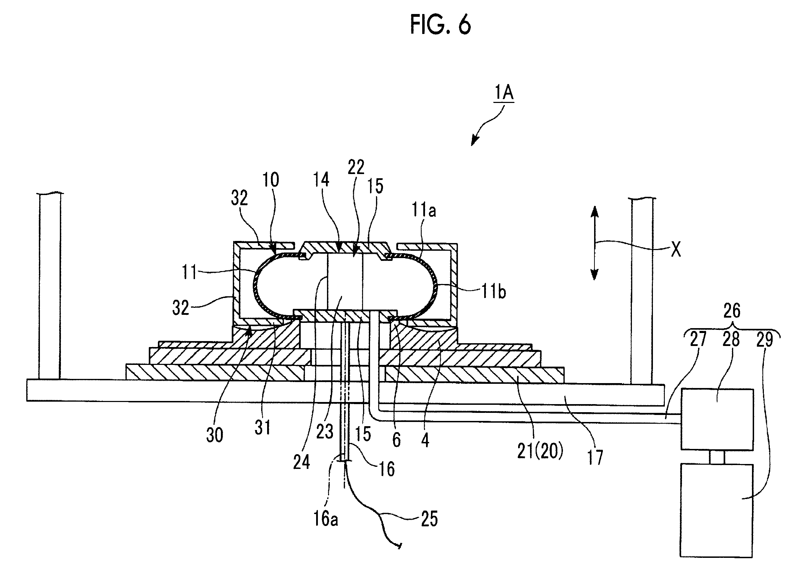

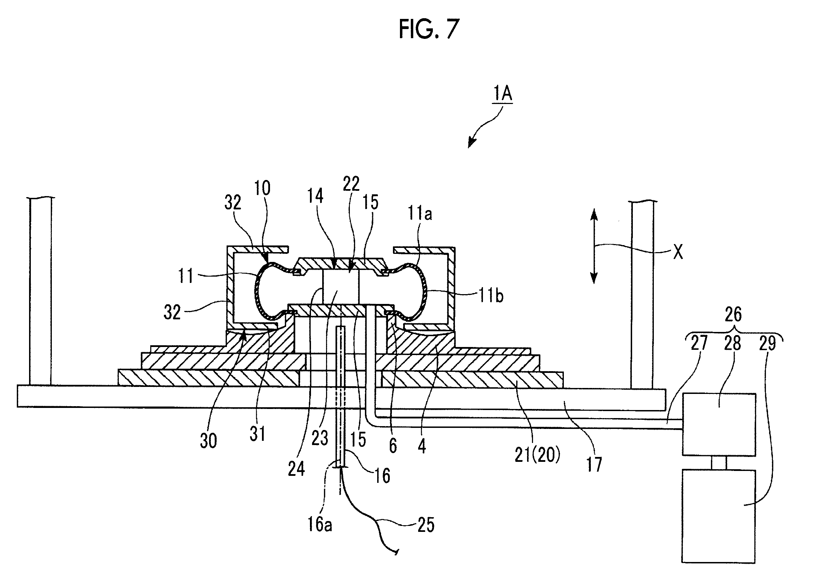

A second embodiment of the present invention is described. Fig. 5 is a schematic view showing a portion of a tire vulcanizing system of the present embodiment. Figs. 6 and 7 are schematic views showing a bladder preheating device of the tire vulcanizing system.

A tire vulcanizing system 100A (refer to Fig. 5) of the present embodiment includes the tire preheating apparatus 50 (shown in Fig. 1) described in the first embodiment, and a tire vulcanizing apparatus 1A (refer to Figs. 5 and 6) which performs vulcanization on a tire preheated by the tire preheating apparatus 50.

The configuration of the tire preheating apparatus 50 of the present embodiment is the same as that of the first embodiment, and descriptions thereof are omitted.

The tire vulcanizing apparatus 1A of the present embodiment shown in Figs. 5 and 6 includes a tire mold 2, a bladder 10, a center mechanism 14, a mold fixing mechanism 17, a mold lifting and lowering mechanism 18, a tire heating mechanism 20, a pressurization medium supply portion 26, and a bladder preheating portion 30.

The tire mold 2 includes an upper side mold 3, a lower side mold 4, an upper bead ring 5, a lower bead ring 6, and a tread mold 7.

The upper side mold 3 and the lower side mold 4 are metal molds for molding both side walls 42 of the tire 40. The upper side mold 3 is attached to the mold lifting and lowering mechanism 18. The lower side mold 4 is attached to the mold fixing mechanism 17.

The upper bead ring 5 and the lower bead ring 6 are metal molds for forming both beads 43 of the tire 40.

The tread mold 7 includes a tread segment 8 and a slide segment 9.

The tread segment 8 is a metal mold which transfers a tread pattern to the tread portion 41 of the green tire 40X.

The slide segment 9 holds the tread segment 8 such that the tread segment 8 is movable in a radial direction of the tire 40. The slide segment 9 is connected to the mold lifting and lowering mechanism 18.

In addition, the configuration of the tire mold 2 is not limited to the above-described configuration. For example, the configuration of the tire mold 2 may be appropriately selected according to a shape of a produced tire or the like.

A bladder 10 is a hollow member for pressing the green tire 40X disposed inside the tire mold 2 to the tire mold 2 from the inside when the tire vulcanizing apparatus 1A is used. The bladder 10 includes a main body portion 11 which has a shape corresponding to the inner surface shape of the green tire 40X vulcanized by the tire vulcanizing apparatus 1A of the present embodiment, and an upper clamp portion 12 and a lower clamp portion 13 which are connected to the center mechanism 14. The inner portion of the bladder 10 is filled with a pressurizing medium (air and liquid), and thus, the bladder 10 presses the inner surface 40b of the green tire 40X. In addition, the bladder 10 is heated by a heater 23 described below, and the green tire 40X can be heated from the inner surface 40b side via the bladder 10.

In addition, the configuration of the bladder 10 is not limited to the above-described configuration.

The center mechanism 14 includes a pair of bladder clamp rings 15 which is connected the upper clamp portion 12 and the lower clamp portion 13 of the bladder 10, and a center post 16 which is connected to the pair of bladder clamp rings 15. The center mechanism 14 moves the pair bladder clamp rings 15 relatively to each other in a center line 16a direction of the center post 16, and displaces the bladder 10 such that the bladder 10 is inserted into and detached from the green tire 40X.

Moreover, the configuration of the center mechanism 14 is not limited to the above-described configuration.

The mold fixing mechanism 17 can support the center mechanism 14 and the lower side mold 4, and supports the bladder preheating portion 30 so as to be movable.

The mold lifting and lowering mechanism 18 causes the upper side mold 3 and the tread mold 7 to move forward and backward with respect to the lower side mold 4 in the center line 16a direction of the center post 16. Moreover, in the present embodiment, the slide segment 9 of the tread mold 7 moves toward the center post 16 side as the mold lifting and lowering mechanism 18 causes the tread mold 7 to approach the mold fixing mechanism 17.

In addition, the configuration of the mold lifting and lowering mechanism 18 is not limited to the above-described configuration.

The tire heating mechanism 20 includes an outer heating mechanism 21 which heats the green tire 40X from the outer surface 40a side of the green tire 40X via the upper side mold 3, the lower side mold 4, and the tread mold 7, and an inner heating mechanism 22 which is attached to the center post 16 and heats the green tire 40X from the inner surface 40b side of the green tire 40X.

For example, the outer heating mechanism 21 has a high-temperature steam channel, and heats the green tire 40X from the outside by the heat of the high-temperature steam. In addition, the configuration of the outer heating mechanism 21 is not limited to the above-described configuration.

The inner heating mechanism 22 includes a heater 23 which is attached to the center post 16, and a wire 25 which supplies power to the heater 23.

The heater 23 heats the tire 40 supported by the upper and lower bead rings 5 and 6 from the inside of the tire 40 by radiation heat. In the present embodiment, the heater 23 heats the tire 40 via the bladder 10. In addition, in a case where the tire vulcanizing apparatus 1A does not include the bladder 10, the heater 23 may directly heat the tire 40 from the inside of the tire 40.

The shape of the heater 23 is a tubular shape which surrounds the center post 16 and is coaxial with the center line 16a of the center post 16. An irradiation surface 24 which emits radiation heat toward the inner surface 40b of the green tire 40X is formed on the outer circumferential surface of the heater 23.

In the heater 23, the known heat generation method which receive power and generates heat may be appropriately selected and adopted. That is, as the heater 23 of the present embodiment, an infrared heater, a ceramic heater, a carbon heater, or the like may be adopted. For example, preferably, the wavelength of the radiation heat from the heater 23 is a wavelength capable of effectively heating the bladder 10 according to absorption wavelength characteristics of the bladder 10. As a heater which can suitably heat the bladder 10 according to the absorption wavelength characteristics of a resin such as rubber configuring the bladder 10, there is an infrared heater which has a wavelength of a range from 1 µm to 10 µm as a peak. For example, as a heater which can suitably heat the bladder 10 according to the absorption wavelength characteristics of a resin such as rubber configuring the bladder 10, there is an infrared heater which has a wavelength of an approximately 3.5 µm as a peak. For example, since a ceramic heater has a peak of a wavelength of radiation heat within a range from 3 µm to 6 µm, the ceramic heater is particularly suitable for the heater 23 of the present embodiment. In addition, in a carbon heater, a peak of a wavelength of radiation heater may be shorter than that of the ceramic heater. However, since time which is required to increase to an optimal temperature for vulcanization so as to be stabilized and the carbon heater can be heated at a higher temperature relative to the ceramic heater, the carbon heater is effective. In addition, the heater 23 may have the configuration (Figs. 2, 3, and 4) similar to that of the internal irradiation-heat heater 55 described in the first embodiment.

The wire 25 is disposed inside the center post 16 and is connected to the heater 23 and a power supply (not shown).

The pressurization medium supply portion 26 supplies the pressurizing medium into the bladder 10 when vulcanization with respect to the green tire 40X is performed, and recovers the pressurizing medium from the inside of the bladder 10 after the vulcanization. In the present embodiment, the pressurization medium supply portion 26 includes a pressurization medium pipeline 27 which is provided one or both of the pair of bladder clamp rings 15 and communicates with the inner portion of the bladder 10, a compressor 28 which supplies and extract the pressurizing medium through the pressurization medium pipeline 27, and a pressurization medium accommodation portion 29.

As the pressurizing medium, a high-temperature steam, a high-temperature dry gas, or the like may be selected. For example, in a case where a high-temperature steam is adopted as the pressurizing medium, the pressurization medium accommodation portion 29 includes a water tank and a boiler. In addition, in a case where nitrogen gas is adopted as the pressurizing medium, the pressurization medium accommodation portion 29 includes a tank in which nitrogen gas is held.

For example, the bladder preheating portion 30 shown in Fig. 6 is disposed in the mold fixing mechanism 17 so as to be movable with respect to the bladder 10.

The bladder preheating portion 30 includes a first bladder heater 31 and a second bladder heater 32.

The first bladder heater 31 and the second bladder heater 32 heat the bladder 10 from the outer surface of the bladder 10 by a heating value corresponding to the configuration of the green tire 40X (refer to Fig. 5) which is an object to be vulcanized. Hereinafter, similarly to the first embodiment, the configuration is exemplified in which preheating of the green tire 40X can be suitably performed in the case where the green tire 40X in which a thickness of a tread portion 41 is thicker than a thickness of a side wall 42 is vulcanized.

In this case, the side wall 42 is the easy vulcanization region A2 and the tread portion 41 is the difficult vulcanization region A1.

The first bladder heater 31 is a heater which heats a region 11a of the outer surface of the bladder 10 which comes into contact with the inner surface of the easy vulcanization region A2 (side wall 42 in the present embodiment) of the green tire 40X. The heat generation method of the first bladder heater 31 is particularly not limited. For example, the first bladder heater 31 may be a heater which comes into contact with the outer surface of the bladder 10 and heats the bladder 10. In addition, the first bladder heater 31 may be a heater which comes into contact with the outer surface of the bladder 10 and heats the bladder 10 via a gaseous heating medium. Moreover, the first bladder heater 31 may be a heater which emits radiation heat toward the outer surface of the bladder 10. In a case where a heating medium is used or in a case where radiation heat is used, even when the bladder 10 has an expanded shape (refer to Fig. 6) or even when the bladder 10 has a contracted shape (refer to Fig. 7), it is possible to uniformly heat the outer surface of the bladder 10.

As a heater which emits radiation heat, there is an infrared heater (for example, may be a ceramic heater, a carbon heater, or the like) which emits infrared rays having a wavelength which is easily absorbed to the bladder 10. Specifically, an infrared heater, which emits infrared rays having a peak within a range from 3 µm to 6 µm which are absorption wavelengths of the bladder 10, may be adopted as the first bladder heater 31 of the present embodiment. As an example of this infrared heater, there is a ceramic heater.

The second bladder heater 32 is a heater which heats a region 11b of the outer surface of the bladder 10 which comes into contact with the inner surface of the difficult vulcanization region A1 (tread portion 41 in the present embodiment) of the green tire 40X by a higher heating value than that of the first bladder heater 31. The heat generation method of the second bladder heater 32 is particularly not limited. For example, the second bladder heater 32 may be a heater which comes into contact with the outer surface of the bladder 10 and heats the bladder 10. In addition, the second bladder heater 32 may be a heater which comes into contact with the outer surface of the bladder 10 and heats the bladder 10 via a gaseous heating medium. Moreover, the second bladder heater 32 may be a heater which emits radiation heat toward the outer surface of the bladder 10. In a case where a heating medium is used or in a case where radiation heat is used, even when the bladder 10 has an expanded shape or even when the bladder 10 has a contracted shape, it is possible to uniformly heat the outer surface of the bladder 10.

As a heater which emits radiation heat, there is an infrared heater (for example, may be a ceramic heater, a carbon heater, or the like) which emits infrared rays having a wavelength which is easily absorbed to the bladder 10. Specifically, an infrared heater, which emits infrared rays having a peak within a range from 3 µm to 6 µm which are absorption wavelengths of the bladder 10, may be adopted as the second bladder heater 32 of the present embodiment. As an example of this infrared heater, there is a ceramic heater.

Affects of the tire preheating apparatus 100A of the present embodiment and effects thereof are described along with a tire preheating method and a tire manufacturing method of the present embodiment.

In the present embodiment, in the step in which vulcanization is performed on the plurality of green tires 40X, in at least a portion of a period until the subsequent green tire 40X is carried into the tire vulcanizing apparatus 1A after vulcanization with respect to the preceding green tire 40X is completed, as shown in Fig. 6, the bladder 10 is preheated by the bladder preheating portion 30 (bladder preheating step).

In addition, in the present embodiment, while vulcanization with respect to the preceding green tire 40X is performed by the tire preheating apparatus 50, preheating with respect to the subsequent green tire 40X is performed as described in the first embodiment (tire preheating step).

In the step (vulcanizing step) in which vulcanization is performed on the preceding green tire 40X, the green tire 40X is heated to temperature at which a vulcanization reaction is promoted, and after the time reaches a vulcanization time corresponding to a desired vulcanization degree, the vulcanized tire 40 is cooled in order to prevent excessive vulcanization. In a cooling process of the vulcanized tire 40, the vulcanization reaction is advanced to some extent.

According to the cooling of the vulcanized tire 40, the bladder 10 is also cooled. In addition, after the vulcanized tire 40 is removed from the tire vulcanizing apparatus 1A, the temperature of the bladder 10 is further decreased.

In the bladder preheating step of the present embodiment, first, after the vulcanized tire 40 is removed from the tire vulcanizing apparatus 1A, the first bladder heater 31 and the second bladder heater 32 of the bladder preheating portion 30 are disposed so as to surround the bladder 10. In the present embodiment, since the bladder 10 has a contracted shape so as to extract the bladder 10 from the vulcanized tire 40, the bladder preheating portion 30 heats the bladder 10 from the outer surface side of the contracted bladder 10. Accordingly, the temperature of the outer surface of the bladder 10 is kept to temperature which does not significantly exceed the vulcanization promotion temperature on the inner surface 40b of the green tire 40X. In addition, in the outer surface of the bladder 10, the temperature of the surface which comes into contact with the easy vulcanization region A2 (side wall 42 in the present embodiment) and the temperature of the surface which comes into contact with the difficult vulcanization region A1 (tread portion 41 in the present embodiment) are kept in a state of being different from each other.

That is, in the present embodiment, in the bladder preheating step, the temperature of the surface which comes into contact with the inner surface of the tread portion 41 in the outer surface of the bladder 10 is kept to a higher temperature than the temperature of the surface which comes into contact with the inner surface of the side wall 42 in the outer surface of the bladder 10. In addition, in the present embodiment, the inner surface 40b of the green tire 40X and the outer surface of the bladder 10 are preheated by the tire preheating apparatus 50 and the bladder preheating portion 30 such that a temperature difference between the inner surface 40b of the green tire 40X and the outer surface of the bladder 10 decreases at mutual contact positions.

In principle, the first bladder heater 31 and the second bladder heater 32 heat the outer surface of the bladder 10 at a temperature from a normal temperature to a temperature less than the temperature at which the vulcanization reaction is promoted in the green tire 40X. In addition, considering a decrease in temperature of the bladder 10 until the subsequent green tire 40X is carried in after the bladder preheating portion 30 is removed from the bladder 10, the bladder 10 may be reheated at a slightly higher temperature than the vulcanization start temperature of the green tire 40X. Moreover, considering a decrease in temperature of the inner surface 40b of the green tire 40X until the green tire 40X is attached to the tire vulcanizing apparatus 1A after the green tire 40X is removed from the tire preheating apparatus 50, the bladder 10 may be preheated at a slightly higher temperature than the vulcanization start temperature of the green tire 40X.

That is, the bladder 10 may be preheated by the first bladder heater 31 and the second bladder heater 32 at a higher temperature than the temperature of the inner surface 40b (normal temperature or temperature of the preheated inner surface) of the green tire 40X.

In the vulcanizing step with respect to the subsequent green tire 40X, first, the subsequent green tire 40X is carried into the tire vulcanizing apparatus 1A. In this step, first, the bladder preheating portion 30 is removed from the bladder 10, subsequently, the green tire 40X is disposed on the lower side mold 4, and thereafter, the members configuring the tire mold 2 are combined so as to surround the green tire 40X.

Subsequently, in the tire mold 2, the tire mold 2 and the bladder 10 are heated, the bladder 10 is pressurized, and vulcanization with respect to the green tire 40X starts. At the time of starting of the vulcanization with respect to the green tire 40X, the temperature of the outer surface of the bladder 10 is higher than the normal temperature since the outer surface of the bladder 10 is preheated by the bladder preheating portion 30, and the temperature of the inner surface 40b of the green tire 40X is higher than the normal temperature since the inner surface 40b of the green tire 40X is preheated by the tire preheating apparatus 50. In addition, since the temperature difference between the bladder 10 and the green tire 40X is small at the contact position therebetween, an amount of movement of heat between the green tire 40X and the bladder 10 is small. As a result, vulcanization starts in the state where the inner surface 40b of the green tire 40X is preheated in a temperature distribution suitable for each of the side wall 42 (easy vulcanization region A2) and the tread portion 41 (difficult vulcanization region A1).

That is, in the present embodiment, in the vulcanizing step, since vulcanization starts in the state where the green tire 40X is preheated in the temperature distribution suitable for each of the easy vulcanization region A2 and the difficult vulcanization region A1, it is possible to vulcanize the green tire 40X such that vulcanization degrees suitable for the easy vulcanization region A2 and the difficult vulcanization region A1 are realized at a shorter period of time relative to the case where the green tire 40X is heated from the normal temperature.

Hereinbefore, the embodiments of the present invention are described with reference to the drawings. However, a specific configuration is not limited to the embodiments, and includes design modifications within a scope which does not depart from the gist of the present invention, or the like.

### Industrial Applicability

The present invention can be used to optimize a temperature distribution at a starting point of vulcanization in a system for vulcanizing a green tire. Reference Signs List

- 1, 1A:: tire vulcanizing apparatus
- 2:: tire mold
- 3:: upper side mold
- 4:: lower side mold
- 5:: upper bead ring
- 6:: lower bead ring
- 7:: tread mold
- 8:: tread segment
- 9:: slide segment
- 10:: bladder
- 11:: main body portion
- 12:: upper clamp portion
- 13:: lower clamp portion
- 14:: center mechanism
- 15:: bladder clamp ring
- 16:: center post
- 17:: mold fixing mechanism
- 18:: mold lifting and lowering mechanism
- 20:: tire heating mechanism
- 21:: outer heating mechanism
- 22:: inner heating mechanism
- 23:: heater
- 24:: irradiation surface
- 25:: wire
- 26:: pressurization medium supply portion
- 27:: pressurization medium pipeline
- 28:: compressor
- 29:: pressurization medium accommodation portion
- 30:: bladder preheating portion
- 31:: first bladder heater
- 32:: second bladder heater
- 40:: tire
- 40X:: green tire
- 41:: tread portion
- 42:: side wall
- 43:: bead
- 44:: shoulder portion
- 50:: tire preheating apparatus
- 51:: external preheating portion
- 52:: first tire heater
- 53:: second tire heater
- 54:: internal preheating portion
- 55:: internal irradiation-heat heater
- 56:: irradiation surface
- 60:: tire holding mechanism
- 100, 100A:: tire vulcanizing system
- A1:: difficult vulcanization region
- A2:: easy vulcanization region

## Claims

1. A tire preheating apparatus, comprising:
an external preheating portion which surrounds the outside of a green tire having an easy vulcanization region and a difficult vulcanization region, and heats the green tire to a normal temperature or more from an outer surface side of the green tire at a temperature less than a temperature at which a vulcanization reaction is promoted in the green tire; and
an internal preheating portion which is disposed inside the green tire, and heats the green tire to a normal temperature or more from an inner surface side of the green tire at a temperature less than a temperature at which a vulcanization reaction is promoted in the green tire,
wherein the external preheating portion includes:
a first tire heater which heats an outer surface of the easy vulcanization region; and
a second tire heater which heats an outer surface of the difficult vulcanization region at a higher heating value than that of the first tire heater.

2. A tire vulcanizing system, comprising:
the tire preheating apparatus according to claim 1;
a tire vulcanizing apparatus which vulcanizes a green tire which is heated from a normal temperature to a temperature less than a temperature at which a vulcanization reaction is promoted by the tire preheating apparatus,
wherein the tire vulcanizing apparatus includes:
a tire mold which surrounds the outside of the green tire;
a bladder which is disposed inside the green tire and pressurizes the green tire from an inner surface side of the green tire toward the tire mold side; and
a bladder preheating portion which heats an outer surface of the bladder from the normal temperature to the temperature less than the temperature at which the vulcanization reaction is promoted in the green tire.

3. The tire vulcanizing system according to claim 2,
wherein the bladder preheating portion includes:
a first bladder heater which heats a region of the outer surface of the bladder which comes into contact with the inner surface of the easy vulcanizing region; and
a second bladder heater which heats a region of the outer surface of the bladder which comes into contact with the inner surface of the difficult vulcanization region at a higher heating value than that of the first bladder heater.

4. A tire preheating method, comprising:
heating a green tire having an easy vulcanization region and a difficult vulcanization region from an outer surface side of the green tire from a normal temperature to a temperature less than a temperature at which vulcanization of the green tire is promoted by a heating value which is relatively smaller with respect to the easy vulcanization region and is relatively greater with respect to the difficult vulcanization region.

5. A tire manufacturing method, comprising:
a preheating step of heating a green tire having an easy vulcanization region and a difficult vulcanization region from an outer surface side of the green tire from a normal temperature to a preheating temperature less than a temperature at which vulcanization of the green tire is promoted by a heating value which is relatively smaller with respect to the easy vulcanization region and is relatively greater with respect to the difficult vulcanization region; and
a vulcanizing step of heating the green tire, which is heated to the preheating temperature, to a temperature exceeding the preheating temperature, and vulcanizing the green tire in a tire mold.

6. A tire manufacturing method, comprising:
a tire preheating step of heating a green tire having an easy vulcanization region and a difficult vulcanization region from an outer surface side of the green tire from a normal temperature to a preheating temperature less than temperature at which vulcanization of the green tire is promoted by a heating value which is relatively smaller with respect to the easy vulcanization region and is relatively greater with respect to the difficult vulcanization region;
a bladder preheating step of heating a bladder disposed inside the green tire to vulcanize the green tire such that a surface of the bladder coming into contact with the easy vulcanization region has a relatively low temperature and a surface of the bladder coming into contact with the difficult vulcanization region has a relatively high temperature; and
a vulcanizing step of disposing the green tire heated to the preheating temperature in a tire mold, allowing an inner surface of the green tire heated to the preheating temperature to come into contact with the bladder, heating the green tire such that the temperature of the green tire exceeds the preheating temperature, and vulcanizing the green tire in the tire mold.
